(19) Europäisches Patentamt
European Patent Office
Office européen des brevets

(11) **EP 4 451 187 A1**

(12) **EUROPEAN PATENT APPLICATION**

(43) Date of publication:
**23.10.2024 Bulletin 2024/43**

(21) Application number: **23168694.0**

(22) Date of filing: **19.04.2023**

(51) International Patent Classification (IPC):
*G06Q 10/08* (2024.01)   *B60R 9/00* (2006.01)
*B60R 11/00* (2006.01)   *B65D 90/00* (2006.01)
*B65D 90/48* (2006.01)   *G01S 13/04* (2006.01)
*G01S 15/04* (2006.01)   *G01S 17/08* (2006.01)
*G06Q 50/28* (2012.01)   *G06V 20/52* (2022.01)
*H04N 23/51* (2023.01)   *H04N 23/57* (2023.01)

(52) Cooperative Patent Classification (CPC):
**G06Q 10/08; B60R 1/29; B60R 11/04; G01S 13/04;**
**G01S 15/08; G01S 15/88; G01S 17/08;**
**G06V 20/52;** B60R 2011/0036; H04N 23/57

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Murata Manufacturing Co., Ltd.**
**Nagaokakyo-shi, Kyoto 617-8555 (JP)**

(72) Inventor: **OKUMURA, Yuki**
**2132 JC, Hoofddorp (NL)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **OCCUPATION RATE DETERMINING MODULE, SYSTEM AND METHOD OF DETERMINING AN OCCUPANCY OF A CARGO REPOSITORY**

(57) An occupation rate determining module configured to determine an occupancy of a cargo repository equipped with a door. The occupation rate determining module comprises a sensor configured to detect a state of the door of the cargo repository, a camera having a field of view including all corners of a loading area of the cargo repository and a processor configured to determine, based on an image taken by the camera, the occupation rate of the cargo repository when the sensor detects a change of the state of the door from an open state to a closed state and/or from a closed state to an open state. Further the occupation rate determining module comprises a housing accommodating the sensor, the camera and the processor.

Fig. 1

## Description

## Technical Field

Embodiments according to the invention related to an occupation rate determining module and a method of determining an occupancy of a cargo repository.

## Background

Currently there exist different systems or manual methods to assess a loading and/or unloading of cargo.

US2007/0040677, for example, describes a device that detects the presence of cargo within a container using microwave radio frequency (RF) energy. The cargo sensor is placed within the inside wall of the cargo trailer such that portions of its housing extend within a space created between the inside wall and outside wall. This makes it difficult to install the sensor within the container as an add-on device, since the truck inside has to be modified.

Thus, there may be a need to provide improvements for a cargo detection, especially, in terms of optimizing an installation of the cargo detection device, e.g., with regard to efficiency, costs and a dependency on the repository.

This is achieved by the subject matter of the independent claims of the present application.

Further embodiments according to the invention are defined by the subject matter of the dependent claims of the present application.

## Summary

The inventors of the present application realized that one problem encountered when trying to install a device for monitoring an occupancy of a cargo repository stems from the fact that sometimes a power supply is not available in the cargo repository, that sometimes the cargo repository itself has to be modified and that the device may be hit by cargo loaded onto or unloaded from the cargo repository. This difficulty is overcome by limiting a determination of the occupation rate of the cargo repository to times at which a state of a door of the cargo repository changes so that a power consumption of the device is reduced.

This is based on the idea that an occupancy of a cargo repository does not change when the door of the cargo repository is closed. It may only change when the door is open, since then the cargo can be loaded onto or unloaded from the cargo repository. Therefore, it is advantageous to take an image of a loading area of the cargo repository when the door is opened and/or closed. This enables an automatic triggering of the determination of the occupation rate. By refraining from performing a continuous monitoring and determination of the occupation rate, it is possible to reduce the power consumption so that the device can be used in a cargo repository with a limited power source or so that the device can be used over a long period of time with an own power source, like a battery. This enables an installation and usage of the device regardless of whether the cargo repository to be monitored has a good power source or not for the device. Concurrently, the sensor for detecting a state of the door, the camera for taking an image of the loading area and the processor for determining the occupation rate of the cargo repository are accommodated in a common housing. This allows an easy installation of the device within the cargo repository, since the sensor, the camera and the processor do not have to be installed separately. Even further, the housing provides a protection of the sensor, the camera and the processor from being hit by cargo.

An embodiment relates to an occupation rate determining module configured to determine an occupancy of a cargo repository equipped with a door. The occupation rate determining module comprises a sensor configured to detect a state of the door of the cargo repository, a camera having a field of view including all corners of a loading area of the cargo repository and a processor configured to determine, based on an image taken by the camera, the occupation rate of the cargo repository when the sensor detects a change of the state of the door from an open state to a closed state and/or from a closed state to an open state. Further the occupation rate determining module comprises a housing accommodating the sensor, the camera and the processor.

A further embodiment relates to a system comprising a cargo repository and the occupation rate determining module. The housing of the occupation rate determining module is mounted to the cargo repository to direct the sensor to the door of the cargo repository and to direct the camera to the loading area of the cargo repository with the field of view including all corners of the loading area of the cargo repository. A position or relative arrangement of the camera and the sensor within the housing may be fixed and only the mounting of the housing to the cargo repository may be flexible. This reduces a complexity at a mounting of the occupation rate determining module, since it is not necessary to mount the sensor, the camera and the processor individually and check whether same are directed to the correct areas within the cargo repository.

An even further embodiment is directed to a method of determining an occupancy of a cargo repository equipped with a door using the occupation rate determining module. The method comprises taking an image of a loading area of the cargo repository using a camera having a field of view including all corners of the loading area; detecting a change of the state of the door of the cargo repository from an open state to a closed state and/or from a closed state to an open state; upon detecting the change of the state of the door, determining, based on the image taken by the camera, the occupation rate of the cargo repository; and not determining the occupation rate of the cargo repository unless a change of the state of the door is detected.

## Brief Description of the Drawings

The drawings are not necessarily to scale, emphasis instead generally being placed upon illustrating the principles of the invention. In the following description, various embodiments of the invention are described with reference to the following drawings, in which:

Fig. 1    shows an embodiment of an inventive system and occupation rate determining module;

Fig. 2a    shows a front view of an embodiment with details regarding a mounting of the occupation rate determining module;

Fig. 2b    shows a side view of an embodiment with details regarding a mounting of the occupation rate determining module;

Fig. 3a    shows schematically a field of view of a camera of the occupation rate determining module;

Fig. 3b    shows schematically a field of view of a sensor of the occupation rate determining module;

Fig. 4    shows an entrance of a container with a door;

Fig. 5a    shows schematically a positioning of an occupation rate determining module within a cargo repository;

Fig. 5b    shows further optional features of an occupation rate determining module;

Fig. 6    shows a horizontal pillar above a door of the cargo repository;

Fig. 7    shows detail with regard to dimensions of the horizontal pillar;

Fig. 8a    shows a first image of the cargo repository taken by a camera of the occupation rate determining module;

Fig. 8b    shows a second image of the cargo repository taken by a camera of the occupation rate determining module;

Fig. 9    shows a determination of an occupation rate by the inventive system or the occupation rate determining module;

Fig. 10    shows an embodiment of an inventive method for determining the occupation rate of a cargo repository.

## Detailed Description of the Embodiments

Equal or equivalent elements or elements with equal or equivalent functionality are denoted in the following description by equal or equivalent reference numerals even if occurring in different figures.

In the following description, a plurality of details is set forth to provide a more throughout explanation of embodiments of the present invention. However, it will be apparent to those skilled in the art that embodiments of the present invention may be practiced without these specific details. In other instances, well-known structures and devices are shown in block diagram form rather than in detail in order to avoid obscuring embodiments of the present invention. In addition, features of the different embodiments described herein after may be combined with each other, unless specifically noted otherwise.

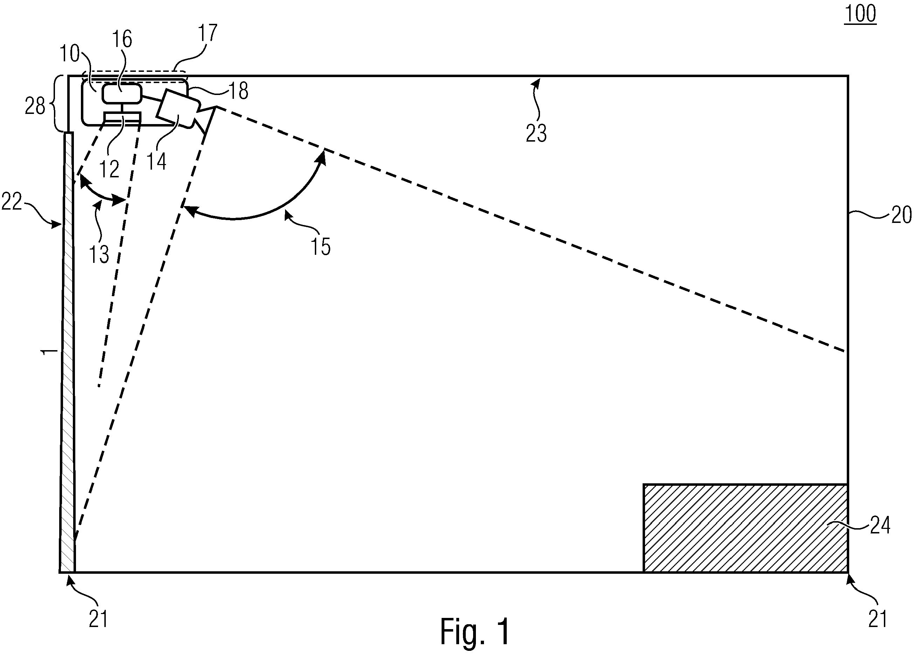

Fig. 1 shows an occupation rate determining module 10 configured to determine an occupancy of a cargo repository 20 equipped with a door 22. The cargo repository 20 may be a trailer, a truck hold, a cargo container or a storage room. The door 22 may be a conventional door or a flap or hatch configured to be opened and/or closed. The occupation rate determining module 10 comprises a sensor 12, a camera 14 and a processor 16.

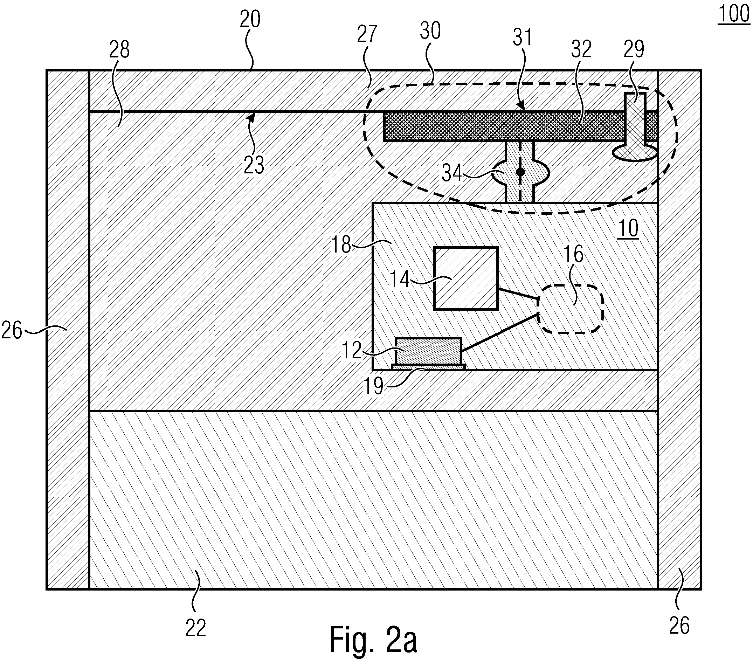

The sensor 12, the camera 14 and the processor 16 are arranged within a housing 18. The housing 18 may define a relative position between the sensor 12 and the camera 14. Therefore it is not necessary to arrange the individual units of the occupation rate determining module 10 individually. Instead, with the arrangement of the housing 18 within the cargo repository 20 a field of view 13 of the sensor 12 and a field of view 15 of the camera 14, i.e. a camera scope range, can be defined. Thus it is easy to install the occupation rate determining module 10 within the cargo repository 20, since only one module is to be arranged or mounted. Optionally, a mounting surface 17 of the housing 18, which is fixable or mountable to a surface of the cargo repository 20, is inclined, e.g., has a predetermined gradient, slope or tilt, so that the loading area is covered by the camera 14, the position of which, e.g., is fixed within the housing 18, and so that the door 22 is monitored by the sensor 12, the position of which, e.g., is fixed within the housing 18. In other words, a structure of the module 10, e.g., the housing 18, may have already the necessary tilt to cover the loadin area of the cargo repository 20 without an additional hinge 34 as shown in Fig. 2a to 3b. The mounting surface 17 may be mounted to the surface of the cargo repository 20 by a coupling member, e.g., an adhesive or a plurality of screws. The housing 18 may be configured to be mounted on an inner top surface 23, i.e. a roof, a top cover, a lid or a cap, of the cargo repository 20 near the door 22.

The position of the sensor 12 and/or of the camera 14 may be fixed within the housing 18, e.g., at a predetermined sensor position and/or a predetermined camera position respectively. An angle of the sensor 12 at its predetermined sensor position and/or an angle of the camera 14 at its predetermined camera position may be fixed or adjustable. The respective angle may be a tilt angle and/or a rotational angle. If the angle of the sensor 12 and/or the angle of the camera 14 is fixed, the field of view 13 of the sensor 12 and/or the field of view 15 of the camera 14 are solely defined by the arrangement of the housing 18 within the cargo repository 20, e.g., by the gradient/tilt of the mounting surface 17 of the housing and/or by a position of the housing within the cargo repository 20, like a position on the top surface 23 and/or like a distance to the door 22. If the angle of the sensor 12 and/or the angle of the camera 14 is adjustable, an area for the field of view 13 of the sensor 12 and/or an area for the field of view 15 of the camera 14 are defined by the arrangement of the housing 18 within the cargo repository 20 and the final field of view 13 of the sensor 12 and/or the final field of view 15 of the camera 14 may be individually fine-adjusted by tuning/adjusting the angle of the sensor 12 and/or the angle of the camera 14.

The sensor 12 may be arranged within the housing 18 at a first surface of the housing 18 and the camera 14 may be arranged within the housing 18 at a second surface of the housing 18, wherein the second surface is arranged perpendicular to the first surface. The first surface may be opposite to the mounting surface 17 of the housing 18. The housing 18 may comprise light-transmissive material, like glas or acrylic glas, so that the sensor 12 and the camera can be encapsulated by the housing without disturbing their functionality or operation. However, it is also possible that the housing comprises another material. In this case the housing may comprise a first opening within the first surface through which the sensor 12 may have access to the surrounding and a second opening within the second surface through which the camera 14 may have access to the surrounding. Optionally, a protective film transmissive for light may cover the first opening and/or the second opening.

The housing 18 protects the units of the occupation rate determining module 10, e.g., the sensor 12, the camera 14 and the processor 16, from being hit by cargo 24, from dust and/or from water.

The camera 14 has a field of view 15 including all corners 21 of a loading area of the cargo repository 20 and the sensor 12 may have a field of view 13 including at least a part of the door 22 of the cargo repository 20.

The sensor 12, e.g., a time of flight (TOF) sensor or an ultrasonic sensor, is configured to detect a state of the door 22 of the cargo repository 20. For example, the sensor 12 is configured to detect whether the door 22 is open or closed. The sensor 12 may be a time of flight sensor. The housing 18 may be configured to pass light of the time of flight sensor towards the door 22, e.g., through the light-transmissive material, through the first opening or through the light-transmissive protective film covering the first opening. The time of flight sensor is configured to measure a distance between the sensor 12 and the door 22. A change of the distance is indicative of a change of the state of the door 22. For example, a predetermined distance detected by the sensor 12 is indicative of a closed door 22 and a distance being different from the first predetermined distance may be indicative of an opened door 22. The processor 16 may be configured to check whether the distance measured by the sensor 12 is equal to the first predetermined distance. Alternatively, the processor 16 may be configured to check whether the distance measured by the sensor 12 is less than the first predetermined distance. A distance being smaller than the first predetermined distance may be indicative of an opened door 22. It is to be noted that the sensor 12 can alternatively be configured to detect a state of the door 22 of the cargo repository 20 using a different method, like a mechanical method, a magnetic method or an electrical method.

The processor 16 is configured to determine, based on an image taken by the camera 14, the occupation rate of the cargo repository 20 when the sensor 12 detects a change of the state of the door 22 from an open state to a closed state and/or from a closed state to an open state. Therefore, the determination by the processor 16 is triggered by data received from the sensor 12. The determination of the occupation rate may only be triggered by a change of the state of the door 22, i.e., the processor 16 may be configured to determine the occupation rate of the cargo repository 20 only at times at which a change of the state of the door 22 is detected. Therefore, the processor 16 performs the energy consuming determination only at certain relevant time instances, i.e. at time instances at which an occupation of the cargo repository may change due to loading or unloading of cargo 24. When the determination of the occupation rate is triggered, the processor 16 may be configured to obtain from the camera 14 the image of the loading area and analyze same to determine the occupation rate of the cargo repository 20.

It is to be assumed that it is less energy consuming to continuously determine the state of the door with the sensor 12 and perform the determination of the occupation rate of the cargo repository 20 only when triggered by the sensor than continuously determining the occupation rate of the cargo repository 20. The power consumption can be even further reduced, if the sensor 12 operates only periodically, i.e. at regular intervals, for example, if the sensor 12 is configured to determine the state of the door 22 every minute, all two minutes or all five minutes.

The camera 14 may be configured to take continuously pictures, e.g., a video, or take periodically pictures, e.g., at regular intervals. Alternatively, the camera 14 is configured to take the picture of the loading area or multiple pictures of the loading area when the sensor 12 detects the change of the state of the door 22. The camera, for example, is triggered only when the door 22 is opened or closed, i.e., is activated only when the situation changes. This is important to save energy. The processor 16 may be configured to obtain the picture taken by the camera 14 at the time instant at which the change of the state of the door 22 is detected or obtain a picture out of multiple pictures taken during a time interval comprising the time instant at which the change of the state of the door 22 is detected or taken during a time interval preceding or following the time instant at which the change of the state of the door 22 is detected, e.g., a picture out of multiple pictures taken in a last capturing window period or taken in a following capturing window period. For example, the processor 16 is configured to determine the occupation rate based on a best brightness image, e.g., by selecting the picture with the best brightness out of the multiple pictures taken during the time interval.

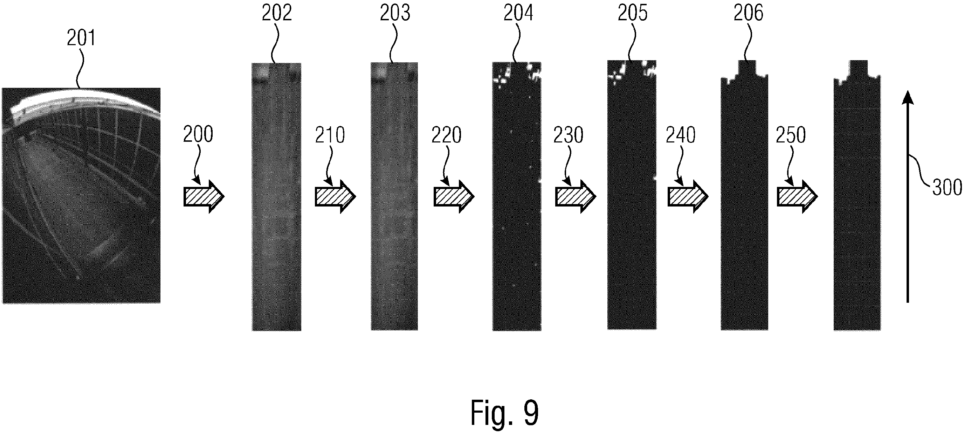

The occupation rate determining module 10 can comprise features and/or functionalities as described with regard to the occupation rate determining module 10 in Fig. 2a-3b, 5a, 5b and can perform the determination of the occupation rate as described with regard to Fig. 9.

Fig. 1 shows a system 100 comprising the cargo repository 20 and the occupation rate determining module 10. The housing 18 of the occupation rate determining module 10 is mounted to the cargo repository 20 to direct the sensor 12 to the door 22 of the cargo repository 20 and to direct the camera 14 to the loading area of the cargo repository 20 with the field of view 15 including all corners 21 of the loading area of the cargo repository 20.

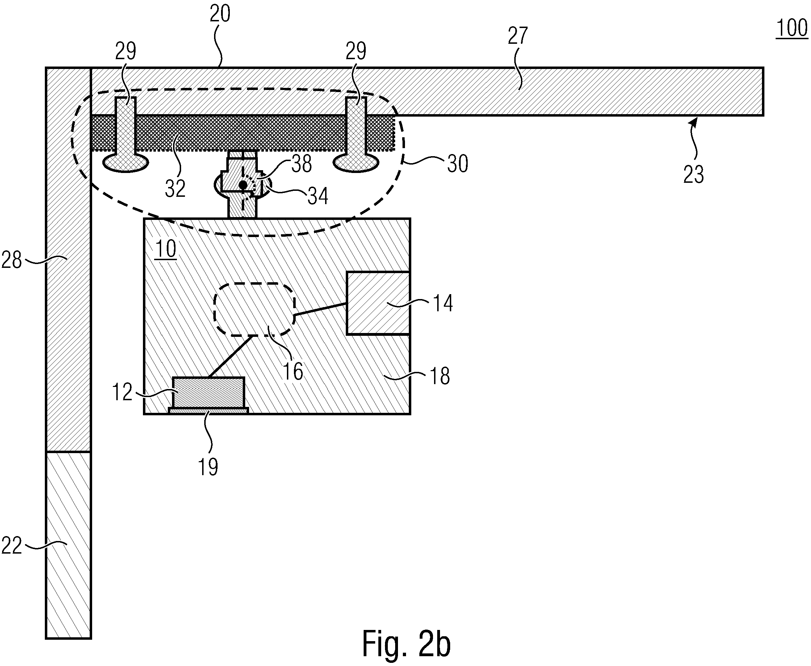

As shown in Fig. 1, but described in more detail with regard to Fig. 2b, 4, 5a, 6 and 7, the cargo repository 20 may comprise a roof and a horizontal pillar 28 between the roof and the door 22 of the cargo repository 20. The occupation rate determining module 10, for example, is mounted in the cargo repository 20 adjacent to the horizontal pillar 28 so as not to protrude beyond a lower edge of the horizontal pillar 28.

The system 100 can further comprise features and/or functionalities as described with regard to the system 100 in Fig. 2a-3b, 5a, 5b and can perform the determination of the occupation rate as described with regard to Fig. 9.

Fig. 2a shows a front view, i.e. a view from inside the cargo repository 20 to the door 22 or to the outside, of a part of the system 100 and Fig. 2b shows a side view of a part of the system 100. Fig. 2a shows two side walls 26, a roof 27, a horizontal pillar 28 and the door 22 of the cargo repository 20 and Fig. 2b shows the roof 27, the horizontal pillar 28 and the door 22 of the cargo repository 20.

As shown in Fig. 2a and Fig. 2b, the occupation rate determining module 10 comprises a sensor 12, a camera 14 and a processor 16, as already described with regard to Fig. 1. The occupation rate determining module 10 may further comprise a mounting device 30 configured to mount the housing 18 to the cargo repository 20 to arrange the camera 14 with the field of view including all corners of the loading area of the cargo repository 20. The mounting device 30 simplifies the arrangement of the occupation rate determining module 10 within the cargo repository 20, especially the field of view of the camera 14 and/or of the sensor 12 can be easily adjusted according to the geometries of the cargo repository 20 with the mounting device 30.

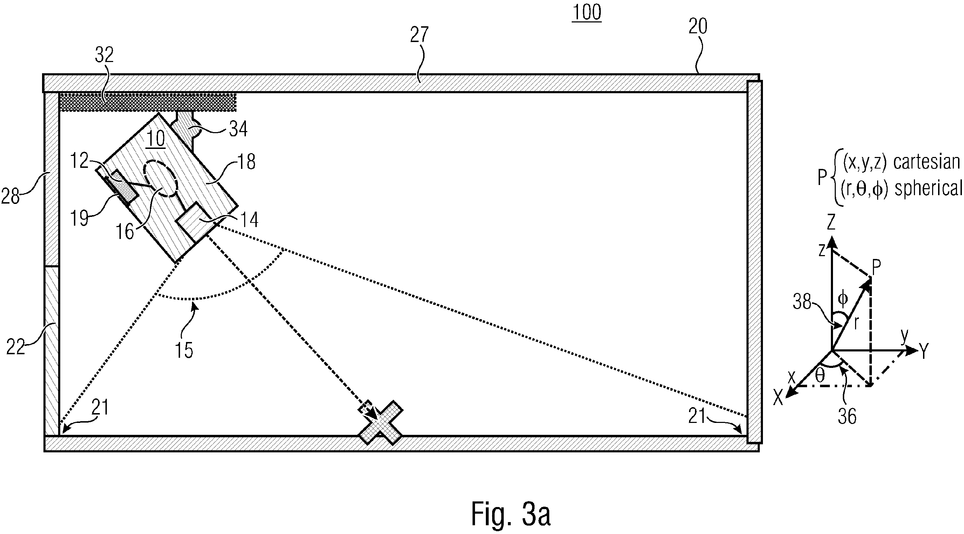

The mounting device 30 may comprise a plate member 32 to be fixed to the cargo repository 20 and/or a coupling member, e.g., a hinge 34, a static element, an adhesive or screws, coupling the housing 18 to the plate member 32 or to a surface of the cargo repository 20, so that the housing 18 is arranged at a specific rotation angle 36 and tilt angle 38, see the coordinate system on the right in Fig. 3a for an exemplary definition of the angles 36 and 38. Fig. 2a and 2b show exemplarily a rotation angle 36 being zero and a tilt angle 38 being 180°.

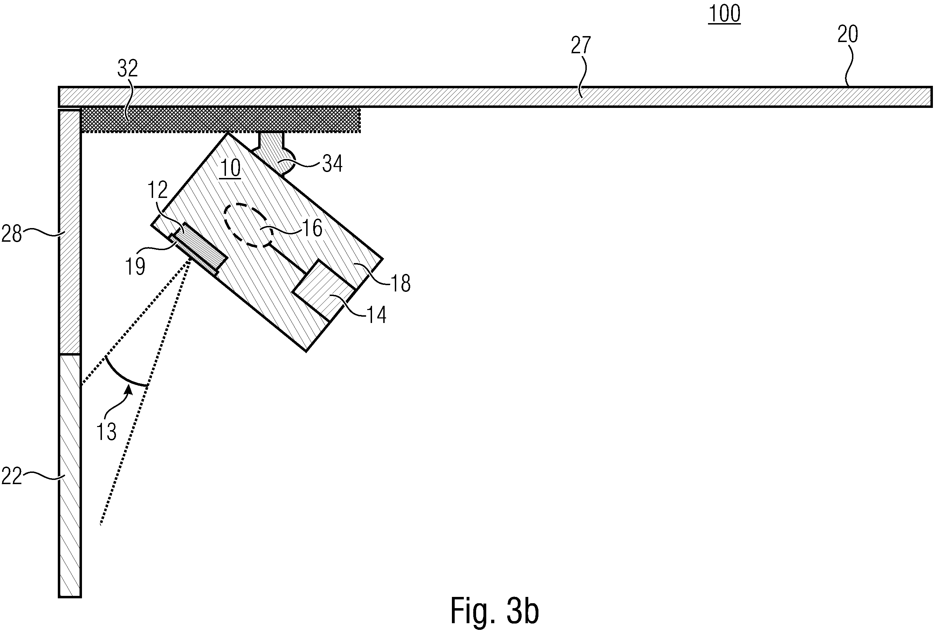

Fig. 2a and 2b show exemplarily the hinge 34 as the coupling member coupling the plate member 32 to the housing 18. The hinge 34 is configured to adjust a tilt angle and/or a rotational angle of the housing 18, as can be seen in more detail in Fig. 3a and 3b. The hinge 34, for example, is a 360° adjustable hinge, e.g., a spherically adjustable hinge, for detailed camera view adjustment, e.g., in all three planes, i.e., in x, y and z direction. Alternatively, the coupling member may be a static, e.g., immobile or stiff, element, e.g., an element with a predefined angle, e.g., a fixed or immobile hinge. The static element may be fixed with one end to the housing 18 and with the other end to the plate member 32 or may be fixed with one end to the housing 18 and may be fixable with the other end to a surface of the cargo repository 20. The static element may define the rotation angle 36 and/or the tilt angle 38. The tilt angle 38 may be fixed, i.e. predefined by the coupling element. The rotational angle 38 may be adjustable at a mounting of the plate member 32 or the coupling member 34 within the cargo repository 20, e.g., by fixing the respective member at a certain rotational angel at an inner surface, e.g., a top surface 23, of the cargo repository 20.

The plate member 32, for example, is a metal plate. The plate member 32 may provide a horizontal adjustment for the occupation rate determining module 10 within the cargo repository 20, e.g. an adjustment within the x-y plane. The plate member 32, for example, may be fixed to an inner surface, e.g., the top surface 23, of the cargo repository 20 with a certain rotational angle, e.g., defining the rotational angle of the housing 18. Optionally, a mounting surface 31 or a coupling surface 33 of the plate member 32 may be inclined, i.e. having a gradient, slope or tilt, providing a vertical adjustment, e.g., defining a tilt angle of the housing 18. The housing 18 may be directly fixed to the plate member 32, e.g., via an adhesive or screws as the coupling element, in which case the plate member 32 defines the rotational and/or tilt angle of the housing 18. The structure of the module 10 with the plate member 32 may already have the necessary tilt to cover the loadin area of cargo repository 20 without an additional hinge 34.

According to an embodiment, the coupling element is the hinge 34 coupling the plate member 32 and the housing 18. The plate member 32 enables an easy and stable fixation of the occupation rate determining module 10 to the cargo repository 20 and the hinge 34 enables an easy adjustment of the field of view of the camera 14 and/or of the sensor 12.

Optionally, the plate member 32 comprises bores adapted to permit the plate member 32 to be fixed to the cargo repository 20 using screw holes provided in the roof 27 of the cargo repository 20. In other words, the occupation rate determining module 10 may be mounted to the roof of the cargo repository 20 using standard screw holes in the roof of the cargo repository 20, which are not specifically dedicated for mounting the occupation rate determining module 10. Thus, the occupation rate determining module 10 can be easily installed as an add-on device for existing cargo repository 20 without having to modify the cargo repository 20 for being able to mount the occupation rate determining module 10 to the cargo repository 20. In Fig. 2a and Fig. 2b, for example the usage of cargo repository's inherent bolts 29 are used to mount the plate member 32 to the roof 27 of the cargo repository 20. Fig. 2a and Fig. 2b show exemplarily the usage of two bolts 29, but it is clear that also one bolt 29 could be enough or that more than two bolts 29 could be used. With the bolts 29 and the metal plate 32 a horizontal rotation of the occupation rate determining module 10 can be adjusted or set and with the hinge 34 a vertical tilt of the occupation rate determining module 10 can be adjusted.

Fig. 2a and Fig. 2b show exemplarily a TOF sensor, i.e. a time of flight sensor, as the sensor 12. The housing comprises exemplarily an opening covered by a laser pass film 19, i.e. a protective film transmissive for the light of the time of flight sensor. Since the TOF sensor cannot penetrate the housing 18, a hole may be created to the casing. The hole is created as an opening for the sensor's view. To ensure the entire module's water/dust proofing, this hole is covered with the laser pass film 19. This film is specifically chosen to not obstruct the performance of ToF and has a high penetration rate for ToF's laser wavelength. The film covering, i.e. the laser pass film 19, passes the TOF sensor's laser.

The entire module is assembled inside a casing, i.e. the housing 18. That means the sensor 12, the camera 14 and the processor 16 are arranged within the housing 18. The housing, for example, is dustproof and waterproof.

According to an embodiment, the camera 14 cannot be tilt inside the housing 18 to avoid seeing an edge and/or corner of the housing 18, i.e. the camera 14 is fixed within the housing 18. The camera position cannot individually be adjusted within the housing 18. Instead the entire housing 18 needs to be adjusted by tilting or rotating the housing 18. The camera may have a 160° field of view.

In the following a location adjustment of the camera 14 and the sensor 12 is described in more detail with regard to Fig. 3a and Fig. 3b. In other words, the position of the camera 14 and the sensor 12 within the housing 18 can be determined as described in the following.

The relative position between the camera 14 and the sensor 12 within the housing 18 may be different for different cargo repository 20. With the method described in the following the herein described occupation rate determining module 10 can be easily individualized for different cargo repository 20, so that same can be easily mounted to the respective cargo repository without having to modify the respective cargo repository and/or so that same can be easily mounted without having to adjust the camera and the sensor individually.

As shown in Fig. 3a the method comprises determining a tilt angle 36 for camera view, e.g., an angle of the housing 18, so that the field of view 15 of the camera 14 includes all corners 21 of the loading area of the cargo repository 20. The tilt angel 36 can be set using the hinge 34. In order to see the all four corners 21 of the loading area, the housing 18 can be tilted, e.g. performing a vertical adjustment, and rotated, e.g. performing a horizontal adjustment, using the hinge 34. The tilt angle $\theta$ 36 may be approximated and a rotation angle $\phi$ 38 can be led by transformation from a Spherical coordinate system to a Cartesian coordinate system. The coordinate transformation from Cartesian coordinates (x, y, z) to spherical coordinates (r, $\theta$, $\phi$) may be performed using the following equations:

$$r = \sqrt{x^2 + y^2 + z^2}$$

$$\theta = \tan^{-1} \frac{y}{x}$$

$$\phi = \tan^{-1} \frac{\sqrt{x^2 + y^2}}{z}$$

Further the method comprises, as shown in Fig. 3b, locating the sensor 12 by considering the estimated tilt angle 36. Based on the approximated tilt angle $\theta$ 36 and rotation angle $\phi$ 38 the sensor location may be determined. The hole size for the sensor 12 within the housing, i.e. the size of the opening covered by the laser pass film 19, may be determined by considering sensor specification like angles or a distance to other obstacles like walls of the cargo repository 20.

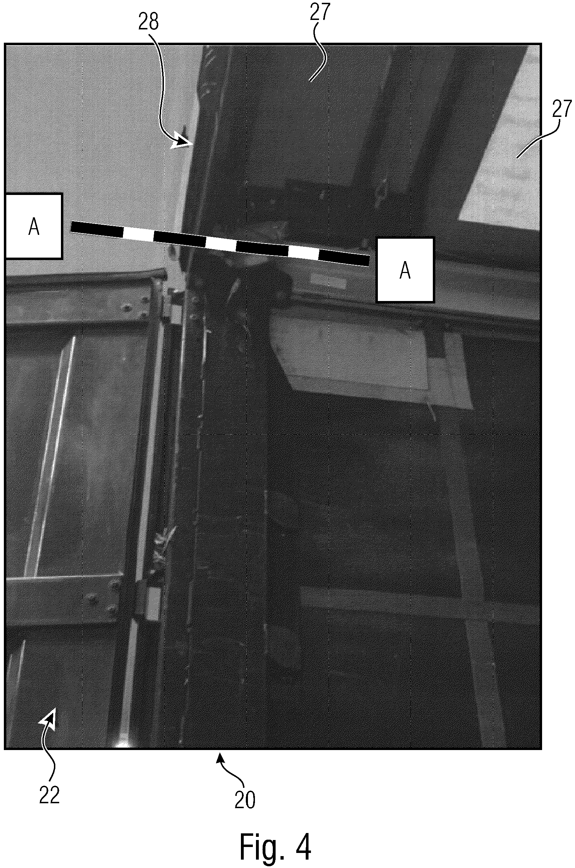

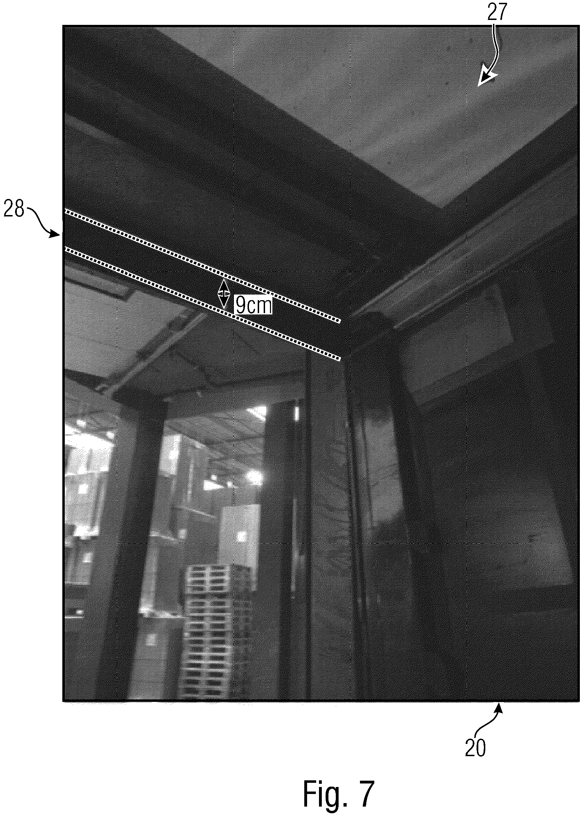

Figures 4 to 7 show exemplarily a container as the cargo repository 20 and a positioning of the occupation rate determining module 10 within the cargo repository 20. The container, for example, comprises above the door 22 a horizontal pillar 28. As shown in Fig. 7, the pillar 28 may extend about 9 cm from the roof 27 of the cargo repository 20 towards a bottom of the cargo repository 20, i.e. toward the loading area. The occupation rate determining module 10 may be mounted to the roof 27 near the pillar 28. The dimensions of the occupation rate determining module 10 are chosen such that same does not protrude over the pillar 28. The dimensions, e.g., a height of the occupation rate determining module 10, may depend on a height of the pillar 28.

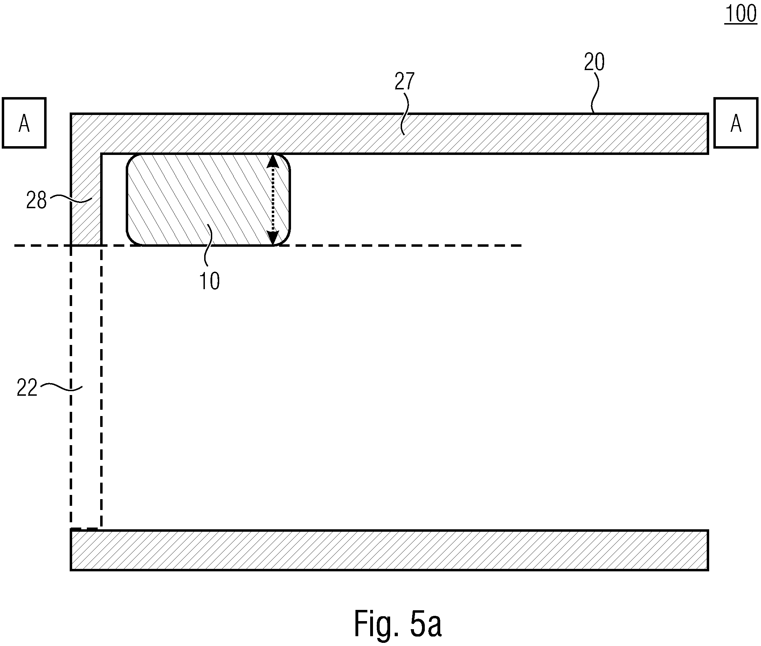

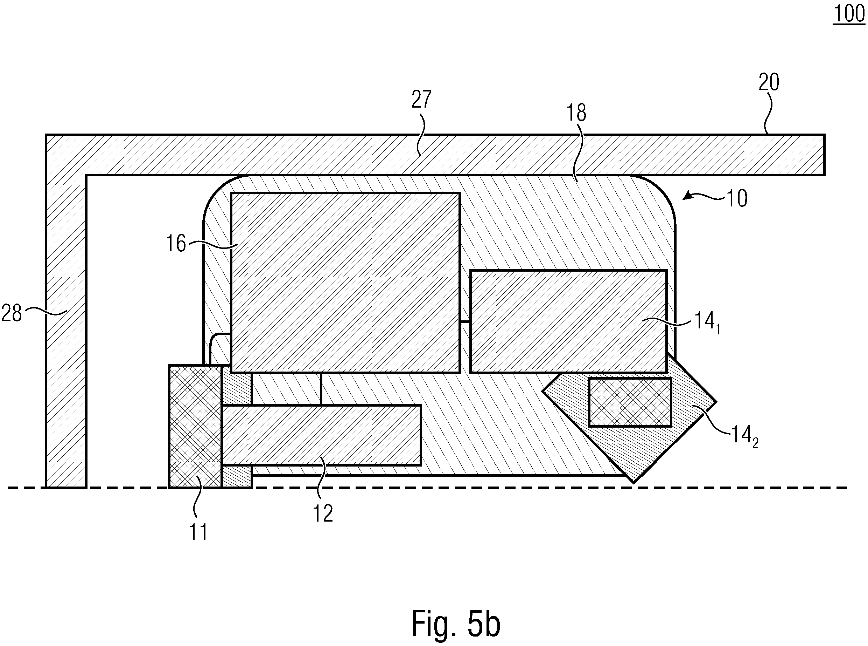

The positioning of the occupation rate determining module 10 within the cargo repository 20 is shown in more detail in Fig. 5a and Fig. 5b. Fig. 5a shows schematically a sectional view A-A of Fig. 4 and Fig. 5b shows a detailed view of Fig. 5a. As shown in Figures 5a and 5b, the occupation rate determining module 10 should be placed higher than the upper horizontal pillar 28 of an entrance side, i.e. the pillar 28 above the door 22, to avoid being hit by loading cargos.

As shown in Fig. 5b, the occupation rate determining module 10 comprises the sensor 12 for detecting a state of the door 22 of the cargo repository 20, the camera 14, and the processor 16. The camera 14, may comprise a camera module $14_2$ directed to the loading area of the cargo repository 20. The processor 16 may comprise a DC-DC converter and a micro controller. Further the occupation rate determining module 10 may comprise a battery, e.g., as back up, if a power source of the cargo repository 20 is temporarily unavailable or if the cargo repository 20 has no power source to which the occupation rate determining module 10 could be connected. For example, occupation rate determining module 10 may comprise the battery to supply the sensor 12, the camera 14 and the processor 16 with energy. Between the housing 18 and the roof 27 of the cargo repository 20 a hinge may be arranged for tilting and/or rotating the housing 18. Optionally, the occupation rate determining module 10 may further comprise a proximity sensor 11 or the sensor 12 may represent a proximity sensor, which is able to detect a state of the door 22 by determining a distance between the sensor and a closed or opened door 22. The housing 18 may have an opening where the sensor 12 and/or the proximity sensor 11 are positioned, which is covered by a film. The film, i.e. the protective film, may function as a filter.

As shown in Fig. 1, 3a, 8a and 8b, the occupation rate determining module 10 should be initially adjusted to be able to see all the four corners 21 of the cargo repository 20, e.g., using the metal plate 32 and the hinge 34. With the camera FOV, i.e. the field of view 15, covering all the four corners 21 of the loading area of the cargo repository 20, e.g. a truck-trailer floor, the position of the sensor 12 for detecting the state of the door 22 ensures that the FOV 13 of the sensor is fully focused only on the 'Door', e.g., see Fig. 3b. This is accomplished by the predefined relative arrangement of the camera 14 and sensor 12 within the housing 18. Hence the sensor 12 will efficiently detect the opening and closing of the door 22 and automatically trigger the processor 16 to start the occupancy calculation. The Horizontal pillar 28 is a short barrier within the cargo repository 20. The position of the sensor 12 within the housing 18 will ensure that its FOV 13 does not lie within the barrier area. The hinge design when adjusted as shown in Fig. 3a and Fig. 3b ensures that the occupation rate determining module 10 will not protrude below the horizontal pillar 28. Hence, it will not obstruct any equipment or vehicles moving in and out the cargo repository 20 during loading and/or unloading. The occupation rate determining module 10, for example, is adapted to be attached to a roof of a truck using existing screw holes, wherein investigations of the inventors showed that corresponding screw holes are provided in an upper left corner of the truck.

According to an embodiment, the occupation rate determining module 10 comprises an interface or communication link to a user interface (UI) or to a receiver, like a computer, a mobile device, a memory device or the like. The interface or communication link may be configured to transmit data on a transmission medium such as a wireless transmission medium or a wired transmission medium. The transmission medium, for example, is the Internet or Bluetooth. The occupation rate determining module 10 may be configured to communicate with an app or UI via the interface, e.g., by transferring the determined occupation rate, e.g., to the UI or receiver, and or by receiving data, e.g., from the UI or receiver. The occupation rate determining module 10 may comprise a transmitter configured to transmit the determined occupation rate to an external receiver.

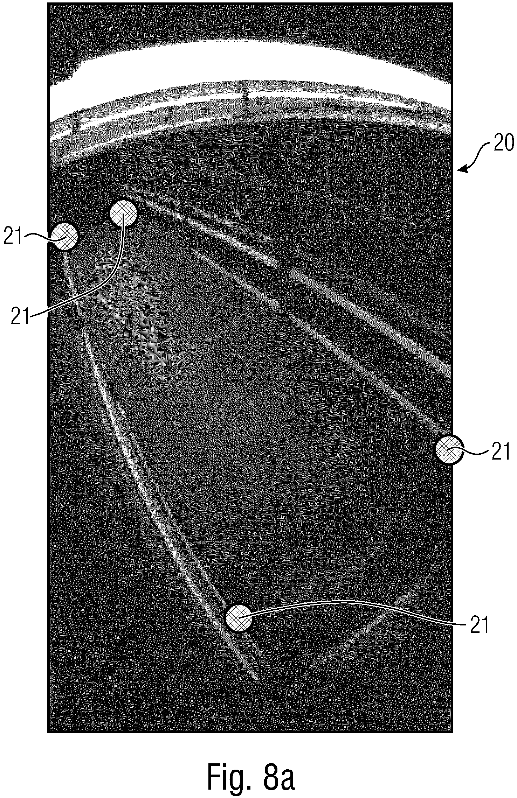

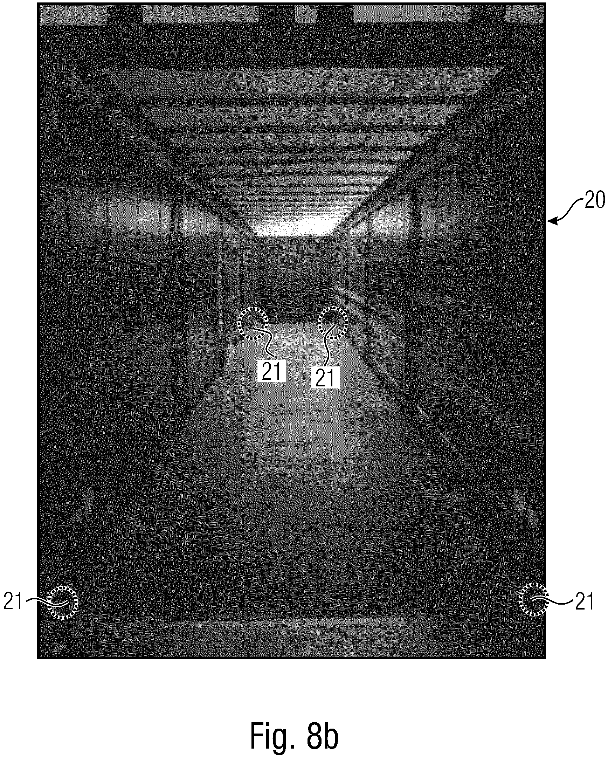

A user may manually mark coordinates of the loading area, e.g., of a truck trailer floor, through the UI or App. The coordinates may correspond to the four corners 21 of the loading area of the cargo repository 20, which are in the field of view of the camera 14 of the occupation rate determining module 10, as can be seen in Fig. 8a and Fig. 8b. In other words, the occupation rate determining module 10 may comprise an interface permitting a user to mark the corners 21 of the loading area in the image taken by the camera 14. The user may mark the four coordinates only once for the loading area of the cargo repository 20 in which the occupation rate determining module 10 is mounted. For example, the occupation rate determining module 10 may be configured to transmit an image of the cargo repository 20 in an empty state and the user may mark the four corners 21 of the loading area of the cargo repository 20.

The occupation rate determining module 10 may be configured to obtain the coordinates via the interface. Optionally, the occupation rate determining module 10 may be configured to save or store the coordinates on a storage medium comprised by the occupation rate determining module 10. As can be seen in Fig. 9, the processor 16 of the occupation rate determining module 10 may be configured to perform a perspective transformation 200 of an image 201, e.g., a first image, taken by the camera 14 based on the four coordinates marked by the user, e.g., to obtain a loading area image 202. The processor 16, for example, is configured to transform a 3D-view of the cargo repository 20 into a 2D-view, e.g., a plan view or top view, of the loading area of the cargo repository 20 using the perspective transformation 200. Thus, instead of showing an inside of the cargo repository 20 out of the view of the camera 14, e.g. including walls and/or a roof of the cargo repository 20 together with the loading area, the loading area image 202 shows the inside of the cargo repository 20 from above, i.e. the loading area from above.

The image 201 undergoing the perspective transformation 200, for example, may correspond to the image taken by the camera 14 when the sensor 12 detected the change of the state of the door 22. Alternatively, the processor 16 may be configured to select the image 201, which should undergo the perspective transformation 200, out of multiple images taken during a time interval comprising the time instant at which the change of the state of the door 22 is detected or taken during a time interval preceding or following the time instant at which the change of the state of the door 22 is detected, e.g., the image 201 may correspond to the best brightness image of the multiple images.

The four coordinates, e.g., of the corners 21, may be determined by the user only once for an empty state of the cargo repository 20 and the processor 16 may be configured to use always the same four coordinate at the perspective transformations 200. Alternatively, the four coordinates may be updated after a certain time interval or may be determined by the user for each image 201 to be transformed by the perspective transformation 200 individually.

The processor 16 may be configured to transform 210 the loading area image 202, e.g., a second image, to a grayscale loading area image 203, e.g., a third image, and perform a filtering 220 of the grayscale loading area image 203 to emphasize edges and, e.g., obtain an edge emphasized loading area image 204, e.g., a fourth image. Further, the processor 16 may be configured to perform an edge detection 230. The edge detection 230 may be applied to the edge emphasized loading area image 204 to obtain an edge detected loading area image 205, e.g., a fifth image. In addition, the processor 16 may be configured to perform a line detection and filling 240, e.g., to obtain a cargo identified loading area image 206, e.g., a sixth image, based on the edge detected loading area image 205. The processor 16 may be configured to determine 250 the occupation rate, e.g., calculate a fill rate, based on the cargo identified loading area image 206.

It may not be necessary to perform all steps shown in Fig. 9. The processor, for example, may be configured to perform the perspective transformation 200 of the image 201 taken by the camera 14 to a transformed image, i.e. the loading area image 202, representing a top view of the loading area, to perform the edge detection 230 using the transformed image, to determine filled regions of the loading area, e.g., see cargo identified loading area image 206, based on the detected edges and to determine 250 the occupation rate using the determined filled regions. This has the advantage that the occupation rate can be determined very efficiently. As described above and shown in Fig. 9, additionally, the processor 16 may be configured to, before performing the edge detection 230, transform 210 the transformed image to grayscale to generate a grayscale image, i.e. the grayscale loading area image 203, and/or to filter 220 the transformed image or the grayscale image to emphasize edges in the transformed image or the grayscale image. This optional transformation 210 and optional filtering 220 enhances the edge detection 230 and improves therefore an accuracy and an efficiency at the occupation rate determination.

In the example shown in Fig. 9 the output, i.e. the determined occupation rate, would be that two out of 33 cargo placement areas are occupied. According to an embodiment, the processor 16 may be configured to determine the floor coverage of the loading area as the occupation rate, i.e., the ratio of the floor which is covered by cargo independent of the height of the specific cargo. For example, independent of whether low cargo or high cargo is arranged over the whole loading area of the cargo repository 20, an occupation rate of 100% would be obtained. The invention represents a mechanical architecture for a system that calculates the empty area of a floor space of a cargo repository, like a truck. For example, the occupation rate may be a percentage representing a ratio of an area filled with cargo to an area not filled with cargo within the loading area, or may be the area filled with cargo within the loading area or may be the area not filled with cargo.

According to an embodiment, the algorithm starts from the assumption that the cargo repository 20 is filled up with cargo starting from the part most distant from the camera 14 towards the camera 14, i.e. starting from the back of the cargo repository 20, i.e. an end of the cargo repository 20 opposite to the door 22, towards the door 22. The processor 16, for example, is configured to assume that no empty spaces are between cargo behind an edge detected closest to the camera 14, i.e. that the loading area is completely filled with cargo behind the edge detected closest to the camera 14, i.e. without empty spaces on a floor of the cargo repository 20. Thus, the processor 16, for example, is configured to completely fill 240 an area behind the edge detected closest to the camera 14, e.g., in camera direction 300. The camera direction 300 may be defined as a direction from the door 22 of the cargo repository 20 to an opposite side of the cargo repository 20. The edge detected closest to the camera 14 may be an edge perpendicular to the camera direction 300.

Alternatively, the processor 16 is configured to detect in camera direction 300 one or more further edges, i.e. edges perpendicular to the camera direction 300. Thus, it is possible to detect an empty space behind cargo or between two cargoes. The processor 16, for example, assumes that an area between an edge detected closest to the camera 14 and a subsequent edge in camera direction 300 represents cargo and, for example, is to be filled 240, and that an area between the subsequent edge and the back of the cargo repository 20 or a further subsequent edge is not to be filled. The processor 16, for example, is configured to, in camera direction 300, alternately fill in or not fill in areas between an edge and a subsequent edge starting at the edge detected closest to the camera 14, wherein filled in areas represent cargo and not filled in areas represent empty spaces.

In case no edge is detected by the processor 16, the processor 16 may be configured to compare a color or structure of the loading area within the loading area image 202 with a reference image showing the cargo repository 20 in an empty state. If the color or structure of the loading area within the loading area image 202 and within a reference image is the same, the processor 16 may be configured to determine an occupation rate of 0 % and if the color or structure of the loading area within the loading area image 202 and within the reference image is not the same, the processor 16 may be configured to determine an occupation rate of 100 %.

Alternatively, if no edge is detected by the processor 16 within the loading area image 202, the processor 16 may be configured to indicate that the calculation of the occupation area is not possible or not sure and/or the processor 16 may be configured to indicate that the cargo repository 20 is empty, e.g., it may return 0/33, wherein the first number, i.e. 0, indicates a number of areas occupied by cargo and the second number, i.e. 33, indicates a capacity of the cargo repository 20, e.g. a maximum available number of areas for cargo. The second number depends on the cargo repository 20, i.e. the second number may be different for different cargo repositories 20. This, for example, may be the case, if the loading area image 202 is taken by the camera 14 at a low light condition within the cargo repository 20.

According to an embodiment, the algorithm is based on the assumption that the cargo repository 20 is filled up with cargo of linear shape, i.e. of cargo with uniform dimensions, especially with regard to a dimension perpendicular to the loading area, i.e. the height of the cargo. Thus, the processor 16, for example, is configured to assume that all cargo behind an edge detected closest to the camera 14 has the same height.

The height of individual cargo within the cargo repository 20 may not be relevant for the occupation rate determining module 10, since same may only determine a floor coverage of the loading area as the occupation rate. Further, it may be irrelevant whether first cargo is positioned over second cargo within the cargo repository 20, i.e. whether cargo is stacked or not. It is also not relevant whether lower cargo is arranged behind higher cargo and is hidden from the camera 14, since the processor 16 may be configured to assume that, in camera direction, a detected edge closest to the camera 14 represents an end of an occupied area, i.e. an area occupied by cargo.

All calculation of the occupation rate is done within the occupation rate determining module 10 by a microcomputer or a microprocessor, i.e. the processor 16, which is programmed accordingly.

The occupation rate determining module 10 and/or the system 100, e.g., as described with regard to figures 1 to 9, can comprise one or more features and/or functionalities of the following sections "Mechanical Structure and Emplacement", "Sensing" and "Image Processing" individually or in combination.

Mechanical Structure and Emplacement

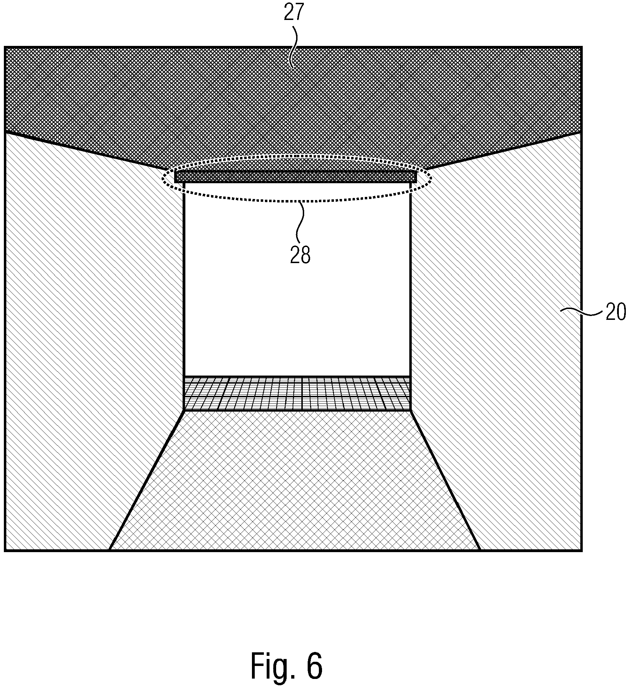

- The camera 14, one or more processors, e.g., comprising the processor 16, and one or more sensors, e.g., comprising the sensor 12, are mounted in one module, i.e. the occupation rate determining module 10, together. Thus, the module installation is done in one place. (see Fig. 1-3b)
- The module 10, for example, is emplaced onto anywhere of the roof edge of a truck, e.g., of the cargo repository 20, where a loading gate exists for image processing and detecting the door open/close. It is not necessary to install the module 10 in an exact location provided that it is mounted to a roof edge of a cargo repository, like a truck, where, e.g., a loading gate exists, and that the camera 14 is visible to scope the four corners 21 of the loading area, e.g., the truck floor (e.g., see Fig. 4 and Fig. 6)
- Place the module 10 close to the door 22 to detect the door's open/close status. The module 10 should be placed within a distance from the door 22 where the sensor 12, e.g., a proximity sensor, can detect the door 22. The distance should be in the range of 2 cm to 20 cm, 2 cm to 15 cm or 5 cm to 15 cm, like at a distance of 10cm. (see Fig. 1 and Fig. 3b)
- Truck inside, i.e. the inside of the cargo repository 20, does not need to be modified for the module 10 installation because the module 10 can be installed by a bolt or multiple bolts that the truck inherently owns. This enables an easy installation. (see Fig. 2a and 2b)
- The system module height should be lower/smaller than 9 cm, otherwise the module 10 may be hit by loading cargo. In other words, place the module 10 higher than an upper horizontal pillar of an entrance side of the cargo repository 20 to avoid being hit by loading cargos. (see Fig. 5a, 5b and 7)
- The module 10 may have its own battery to cover the period when there is no power supply from the truck's own power source, i.e. from the power source of the cargo repository 20. The truck's own power source is sometimes not available

Sensing

- The main purpose of the sensor 12 is reducing power consumption because the power source is limited in a cargo repository 20 like a truck. (Truck's battery and module's battery)
- The sensor 12 contributes to reducing the power consumption by limiting occupancy calculation only around the door open-close timing
- To trigger the image processing automatically, several types of sensors may be comprised by the occupation rate determining module 10: Proximity sensor or TOF sensor, Ambient light sensor and Accelerometer to detect a status of the truck. (For example, door-open/close, truck is moving/parking etc.; see Fig. 5b)

Image Processing

- Using a single camera 14 and a processor 16 to calculate the empty area of the loading area, e.g., the truck floor
- The entire truck floor should be visible by the camera 14 of the module 10. Place the camera 14 where it can see all the four corners 21 of the loading area, e.g., a truck floor, for the image processing algorithm (see Fig. 1, Fig. 3a, Fig. 8a and 8b)
- In addition, the user may regularly calibrate the system that specifies the 4 corners 21 of the truck floor (see Fig. 8a and 8b)
- The system 100 may return 'calculation is impossible, or calculation result is not sure' under complex situation. For example, under dark lightning condition, irregular cargo in alignment, shape, or color etc.,
- Currently by using a single camera 14 and a processor 16, empty floor calculation can be executed (see Fig. 9). However, the calculation may work under the following specific conditions:

  • Cargo must be loaded from the back
  • The shape of the load must be linear
  • The inside of the truck must be enough bright for the camera to see the corners of the floor

- The invention reduces power consumption by limiting occupancy calculation only around the door open-close timing that, for example, relates to the end of loading cargos

This technology could be used in various areas, especially for object detection and space calculation that changes over time. For example, container occupancy, elevator crowdedness and garbage bin full or not.

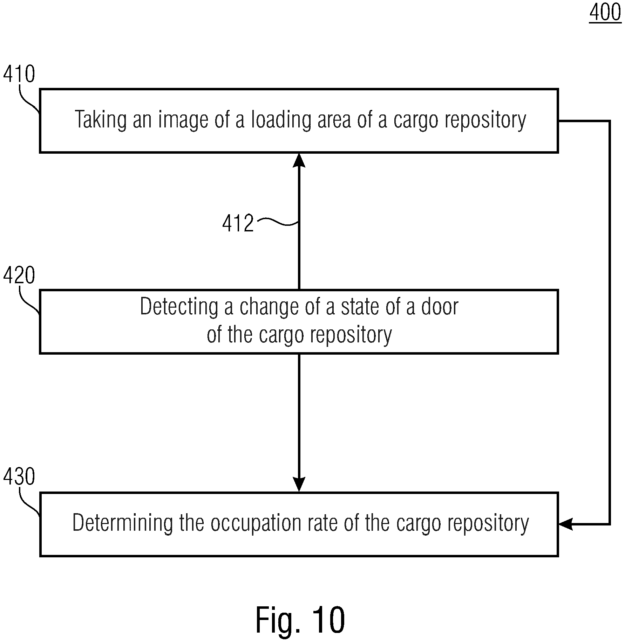

Fig. 10 shows a method 400 of determining an occupancy of a cargo repository equipped with a door. The method 400, for example, uses a herein described occupation rate determining module 10. The method 400 is based on the same considerations as the above-described system 100 and occupation rate determining module 10. The method 400 can, by the way, be completed with all features and/or functionalities, which are also described with regard to the system 100 and/or the occupation rate determining module 10. For example, corresponding method steps may be derivable from features an and/or functionalities described with regard to the system 100 and/or the occupation rate determining module 10.

The method 400 comprises taking 410 an image of a loading area of the cargo repository using a camera having a field of view including all corners of the loading area and detecting 420 a change of the state of the door of the cargo repository from an open state to a closed state and/or from a closed state to an open state. Optionally, the taking 410 of the image may be triggered 412 by the detected change of the state of the door or may be triggered manually or remotely, e.g., by a user. Upon detecting the change of the state of the door or a trigger by a user, the method 400 comprises determining 430, based on the image taken by the camera, the occupation rate of the cargo repository. Further, the method 400 comprises not determining 430 the occupation rate of the cargo repository unless a change of the state of the door or a trigger by a user is detected 420.

Optionally, the occupation rate determining module 10 may comprise an interface to a cloud or app, such as a smartphone app. The triggering by the user may be performed by a remote user, e.g., via a user interface, such as a smartphone app, e.g., a cloud based smartphone app.

Optionally, the method 400 comprises adjusting the orientation of the camera so that the field of view includes all corners of the loading area of the cargo repository, marking the corners of the loading area of the cargo repository, and determining 430 the occupation rate of the cargo repository using the image taken 410 by the camera in which the corners of the loading area are marked.

**Claims**

1. An occupation rate determining module (10) configured to determine an occupancy of a cargo repository (20) equipped with a door (22), the occupation rate determining module (10) comprising:

   a sensor (12) configured to detect a state of the door (22) of the cargo repository (20);
   a camera (14) having a field of view (15) including all corners (21) of a loading area of the cargo repository (20);
   a processor (16) configured to determine, based on an image (201) taken by the camera (14), the occupation rate of the cargo repository (20) when the sensor (12) detects a change of the state of the door (22) from an open state to a closed state and/or from a closed state to an open state,
   a housing (18) accommodating the sensor (12), the camera (14) and the processor (16).

2. The occupation rate determining module (10) of claim 1, wherein the processor (16) is configured to determine the occupation rate based on a best brightness image in a last capturing window period.

**3.** The occupation rate determining module (10) of claim 1 or 2 comprising a mounting device (30) configured to mount the housing (18) to the cargo repository (20) to arrange the camera (14) with the field of view (15) including all corners (21) of the loading area of the cargo repository (20).

**4.** The occupation rate determining module (10) of claim 3, wherein the mounting device (30) comprises a plate member (32) to be fixed to the cargo repository (20) and a coupling member coupling the housing to the plate member so that the housing is arranged at a specific rotation angle and tilt angle, optionally, the plate member (32) comprises bores adapted to permit the plate member (32) to be fixed to the cargo repository (20) using screw holes provided in the roof of the cargo repository (20).

**5.** The occupation rate determining module (10) of one of claims 1 to 4, wherein the sensor (12) is an object detection sensor, such as an ultrasonic sensor or a time of flight sensor, wherein the housing (18) has an opening configured to pass light of the time of flight sensor toward the door (22) of the cargo repository (20), wherein a protective film (19) transmissive for the light of the time of flight sensor covers the opening of the housing (18).

**6.** The occupation rate determining module (10) of one of claims 1 to 5, wherein the processor (16) is configured to perform a perspective transformation (200) of the image (201) taken by the camera (14) to a transformed image (202) representing a top view of the loading area, to perform an edge detection (230) using the transformed image (202), to determine filled regions of the loading area based on the detected edges and to determine the occupation rate using the determined filled regions.

**7.** The occupation rate determining module (10) of claim 6, wherein the processor (16) is configured to, before performing the edge detection (230), transform (210) the transformed image (202) to grayscale to generate a grayscale image (203), and/or to filter (220) the transformed image (202) or the grayscale image (203) to emphasize edges in the transformed image (202) or the grayscale image (203).

**8.** The occupation rate determining module (10) of one of claims 1 to 7, comprising a transmitter configured to transmit the determined occupation rate to an external receiver and/or a battery to supply the sensor (12), the camera (14) and the processor (16) with energy.

**9.** The occupation rate determining module (10) of one of claims 1 to 8, comprising an interface permitting a user to mark the corners (21) of the loading area in the image taken by the camera (14).

**10.** A system (100) comprising a cargo repository (20) and the occupation rate determining module (10) of one of claims 1 to 9, wherein the housing (18) of the occupation rate determining module (10) is mounted to the cargo repository (20) to direct the sensor (12) to the door (22) of the cargo repository (20) and to direct the camera (14) to the loading area of the cargo repository (20) with the field of view including all corners (21) of the loading area of the cargo repository (20).

**11.** The system (100) of claim 10, wherein the cargo repository (20) comprises a the roof and a horizontal pillar (28) between the roof and the door (22) of the cargo repository (20), wherein the occupation rate determining module (10) is mounted in the cargo repository (20) adjacent to the horizontal pillar (28) so as not to protrude beyond a lower edge of the horizontal pillar.

**12.** The system (100) of claim 10 or 11, wherein the cargo repository (20) is a trailer or a truck hold.

**13.** The system (100) of claim 12, wherein the occupation rate determining module (10) is mounted to the roof of the cargo repository (20) using standard screw holes in the roof of the cargo repository (20), which are not specifically dedicated for mounting the occupation rate determining module (10).

**14.** A method (400) of determining an occupancy of a cargo repository equipped with a door using the occupation rate determining module according to one of claims 1 to 9, the method comprising:

taking (410) an image of a loading area of the cargo repository using a camera having a field of view including all corners of the loading area;
detecting (420) a change of the state of the door of the cargo repository from an open state to a closed state and/or from a closed state to an open state;
upon detecting the change of the state of the door or a trigger by a user, determining (430), based on the image taken by the camera, the occupation rate of the cargo repository; and
not determining (430) the occupation rate of the cargo repository unless a change of the state of the door or a trigger by a user is detected.

**15.** The method (400) of claim 14 comprising:

adjusting the orientation of the camera so that the field of view includes all corners of the loading area of the cargo repository;
marking the corners of the loading area of the cargo repository; and
determining (430) the occupation rate of the cargo repository using the image taken by the camera in which the corners of the loading area are marked.

Fig. 1

EP 4 451 187 A1

Fig. 2a

EP 4 451 187 A1

Fig. 2b

EP 4 451 187 A1

Fig. 3a

Fig. 3b

Fig. 4

Fig. 5a

Fig. 5b

EP 4 451 187 A1

Fig. 6

EP 4 451 187 A1

Fig. 7

22

Fig. 8a

Fig. 8b

Fig. 9

_400_

410

Taking an image of a loading area of a cargo repository

412

420

Detecting a change of a state of a door
of the cargo repository

430

Determining the occupation rate of the cargo repository

Fig. 10

Europäisches
Patentamt

European
Patent Office

Office européen
des brevets

## EUROPEAN SEARCH REPORT

Application Number

EP 23 16 8694

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/271582 A1 (BENNETT JESSE WILLIAM [US] ET AL) 5 September 2019 (2019-09-05) * paragraphs [0005], [0024] – [0026], [0030], [0033], [0038], [0041] – [0047], [0058], [0067], [0070] – [0075], [0090], [0127] – [0128] * * paragraphs [0148] – [0153], [0179] – [0181], [0190] – [0192]; claims; figures * | 1-15 | INV. G06Q10/08 B60R9/00 B60R11/00 B65D90/00 B65D90/48 G01S13/04 G01S15/04 G01S17/08 G06Q50/28 |
| X | US 2022/318963 A1 (WALSTROM BRIAN JOSEPH [US] ET AL) 6 October 2022 (2022-10-06) * paragraphs [0017], [0022] – [0027], [0029], [0032] – [0037], [0039], [0043] – [0048], [0073]; claims; figures * | 1-15 | G06V20/52 H04N23/51 H04N23/57 |
| A | US 2013/342653 A1 (MCCLOSKEY SCOTT [US] ET AL) 26 December 2013 (2013-12-26) * paragraphs [0010], [0014], [0018], [0026], [0036] – [0038], [0041], [0045] – [0047]; claims; figures * | 1-15 | |

TECHNICAL FIELDS
SEARCHED (IPC)

G06Q
G01S
B60R
G06V
H04N
B65D

The present search report has been drawn up for all claims

| Place of search | Date of completion of the search | Examiner |
|---|---|---|
| Munich | 18 September 2023 | Herry, Tzvetanka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 8694

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2023

| Patent document cited in search report | | Publication date | Patent family member(s) | | Publication date |
|---|---|---|---|---|---|
| US 2019271582 | A1 | 05-09-2019 | EP | 3514573 A1 | 24-07-2019 |
| | | | US | 10302478 B1 | 28-05-2019 |
| | | | US | 2019271582 A1 | 05-09-2019 |
| US 2022318963 | A1 | 06-10-2022 | US | 11195260 B1 | 07-12-2021 |
| | | | US | 2022318963 A1 | 06-10-2022 |
| US 2013342653 | A1 | 26-12-2013 | NONE | | |

EPO FORM P0459

For more details about this annex : see Official Journal of the European Patent Office, No. 12/82

**EP 4 451 187 A1**

## REFERENCES CITED IN THE DESCRIPTION

**Patent documents cited in the description**

- US 20070040677 A